# EUROPEAN PATENT SPECIFICATION

(11) **EP 3 749 061 B1**
(45) Date of publication and mention of the grant of the patent: **22.03.2023**
(21) Application number: 19746872.1
(22) Date of filing: 22.01.2019
(51) Int. Cl.: F21S 8/04, F21V 33/00, F24F 1/0007, F24F 1/0047, H05B 47/10, H05B 47/175, H05B 47/115, H05B 45/10, F21V 23/04, F21Y 115/10

(54) **AIR-CONDITIONING LIGHT-EMITTING SYSTEM**
LICHTEMITTIERENDE KLIMAANLAGE
SYSTÈME ÉLECTROLUMINESCENT DE CLIMATISATION

(30) Priority: 30.01.2018 JP 2018013673
(43) Date of publication of application: 09.12.2020
(73) Proprietor: DAIKIN INDUSTRIES, LTD., Osaka-Shi, Osaka 530-0001 (JP)
(72) Inventor: SHIOHAMA, Kousuke, Osaka-shi, Osaka 530-8323 (JP); KOJIMA, Nobuyuki, Osaka-shi, Osaka 530-8323 (JP); TOYOFUKU, Tatsuya, Osaka-shi, Osaka 530-8323 (JP); MURATA, Masaaki, Osaka-shi, Osaka 530-8323 (JP)
(74) Representative: Conti, Marco
(86) International application number: PCT/JP2019/001855
(87) International publication number: WO 2019/151047

(56) References cited:
- WO-A1-2010/051614
- WO-A1-2015/037334
- JP-A- 2005 257 129
- US-A1- 2008 178 619

## Description

### TECHNICAL FIELD

The present disclosure relates to an air-conditioning light-emitting system.

### BACKGROUND ART

It is conventionally known that a plurality of lighting devices for illuminating a target space are installed on a ceiling or the like to control brightness of the target space or for other purposes. For example, Patent Literature 1 (JP 2012-28015 A) proposes a lighting system which controls a plurality of lighting devices provided on a ceiling and connected to each other via a network. Further examples of known air-conditioning light-emitting systems are disclosed in patent documents US20080178619A1, WO2010051614A1, WO2015037334A1 and JP2005257129A.

### <Technical Problem>

Meanwhile, for example, it is desired in some cases that the space is not only illuminated by the lighting devices but also air-conditioned by an air conditioning unit.

The present disclosure has been developed in view of the aforementioned points. An object of the present disclosure is to provide an air-conditioning light-emitting system capable of controlling a plurality of light emitting units that illuminate a space air-conditioned by a plurality of air conditioning units.

### SUMMARY OF THE INVENTION

Aim of the present invention is to provide an air-conditioning light-emitting system which improves the state of the art indicated above. This aim is achieved by the air-conditioning light-emitting system according to the corresponding appended claims.

### <Solution to Problem>

Please note that embodiments described by the fourth aspect and modifications "E" and "G" of the present description are not covered by the subject-matter of the claims.

An air-conditioning light-emitting system according to a first aspect is an air-conditioning light-emitting system including a plurality of air conditioning units and a plurality of light emitting units, and including first communication means, second communication means, and a control unit. The first communication means connects the air conditioning units such that the air conditioning units communicate with each other. The second communication means respectively connects the air conditioning units and the light emitting units such that each of the air conditioning units communicates with the corresponding light emitting unit. The control unit controls the plurality of light emitting units using the first communication means and the second communication means.

Note that the first communication means may connect the air conditioning units such that the air conditioning units communicate with each other with one-to-one correspondence, or with one-to-many correspondence. For example, the first communication means may be communication means using a communication line which is a wired line, or may be wireless communication means. The second communication means may connect the air conditioning units and the light emitting units such that the air conditioning units communicate with the light emitting units with one-to-one correspondence, or with one-to-many or many-to-one correspondence. For example, the second communication means may be communication means using a communication line which is a wired line, or may be wireless communication means. A plurality of the second communication means are provided.

Note that the respective light emitting units may be connected to each other using the communication means either in a communicable manner or not in a communicable manner. It is preferable that the respective light emitting units are not directly connected to each other using a communication line which is a wired line.

According to this air-conditioning light-emitting system, the respective light emitting units are connected to a plurality of the air conditioning units via the second communication means such that the light emitting units communicate with the air conditioning units that are connected in such a manner as to communicate with each other via the first communication means. Accordingly, communication with the plurality of light emitting units is achievable by using the first communication means that connects the plurality of air conditioning units such that the air conditioning units communicate with each other. In this manner, the plurality of light emitting units illuminating a space air-conditioned by the plurality of air conditioning units are controllable.

Note that communication with the plurality of light emitting units is achievable using the first communication means that connects the plurality of air conditioning units such that the air conditioning units communicate with each other even when the plurality of light emitting units are not directly connected such that the light emitting units communicate with each other, for example. Accordingly, the plurality of light emitting units are controllable.

An air-conditioning light-emitting system according to a second aspect is the air-conditioning light-emitting system according to the first aspect, in which the light emitting units receive power source supply from the air conditioning units. Each of the air conditioning units from which the corresponding light emitting unit receives power source supply is the air conditioning unit connected to the corresponding light emitting unit via the second communication means such that the air conditioning unit communicates with the light emitting unit.

According to this air-conditioning light-emitting system, each of the light emitting units receives power source supply from the air conditioning unit to which the corresponding light emitting unit is communicably connected via the second communication means. Accordingly, a power source supplied to the air conditioning unit can be used for the light emitting unit.

Note that this air-conditioning light-emitting system can eliminate the necessity of connecting the light emitting unit to an electric supply source other than the air conditioning unit, for example.

An air-conditioning light-emitting system according to a third aspect is the air-conditioning light-emitting system according to the first aspect or the second aspect, in which the plurality of light emitting units include a slave light emitting unit and a master light emitting unit. The master light emitting unit performs light emission control of the master light emitting unit, and light emission control of the slave light emitting unit that is a light emitting unit other than the master light emitting unit.

Note that one of the plurality of light emitting units is preferably a master light emitting unit that performs light emission control of the master light emitting unit, and light emission control of the slave light emitting unit that is a light emitting unit other than the master light emitting unit.

This air-conditioning light-emitting system can also perform light emission control of the slave light emitting unit, which is the other light emitting unit, by using the master light emitting unit.

An air-conditioning light-emitting system according to a fourth aspect, which is not covered by the subject-matter of the claims, is the air-conditioning light-emitting system according to the third aspect, in which the second communication means is wireless communication means. The master light emitting unit performs light emission control of the slave light emitting unit via the air conditioning unit to which the master light emitting unit is communicably connected via the second communication means.

According to this air-conditioning light-emitting system, the master light emitting unit is allowed to become a main unit for performing light emission control of the slave light emitting unit using the first communication means of the air conditioning unit.

An air-conditioning light-emitting system according to a fifth aspect is the air-conditioning light-emitting system according to the third aspect, and further includes third communication means. The third communication means wirelessly connects the master light emitting unit and the slave light emitting unit such that the master light emitting unit communicates with the slave light emitting unit. The master light emitting unit performs light emission control of the slave light emitting unit via the third communication means.

According to this air-conditioning light-emitting system, the master light emitting unit is allowed to become a main unit for performing direct light emission control of the slave light emitting unit.

An air-conditioning light-emitting system according to a sixth aspect is the air-conditioning light-emitting system according to any of the first to fifth aspects, in which the plurality of light emitting units are configured to emit light in linkage with each other.

According to this air-conditioning light-emitting system, the plurality of light emitting units can emit light in linkage with each other.

### BRIEF DESCRIPTION OF THE DRAWINGS

FIG. 1 is a schematic configuration diagram of an air-conditioning light-emitting system.
FIG. 2 is a schematic external perspective view of an indoor unit.
FIG. 3 is a schematic plan configuration diagram of the indoor unit.
FIG. 4 is a schematic side configuration diagram of the indoor unit taken along cross section A-A in FIG. 3.
FIG. 5 is a schematic exploded perspective view of a light emitting unit.
FIG. 6 is a schematic control block configuration diagram of the air-conditioning light-emitting system.
FIG. 7 is a control flowchart of an LED and a buzzer.
FIG. 8 is a control flowchart of linked control of a plurality of the light emitting units.
FIG. 9 is an explanatory diagram showing an example of a positional relationship between a plurality of the indoor units and the plurality of light emitting units.
FIG. 10 is a schematic control block configuration diagram of an air-conditioning light-emitting system according to modification (A).

### DESCRIPTION OF EMBODIMENT

### (1) Air-conditioning light-emitting system

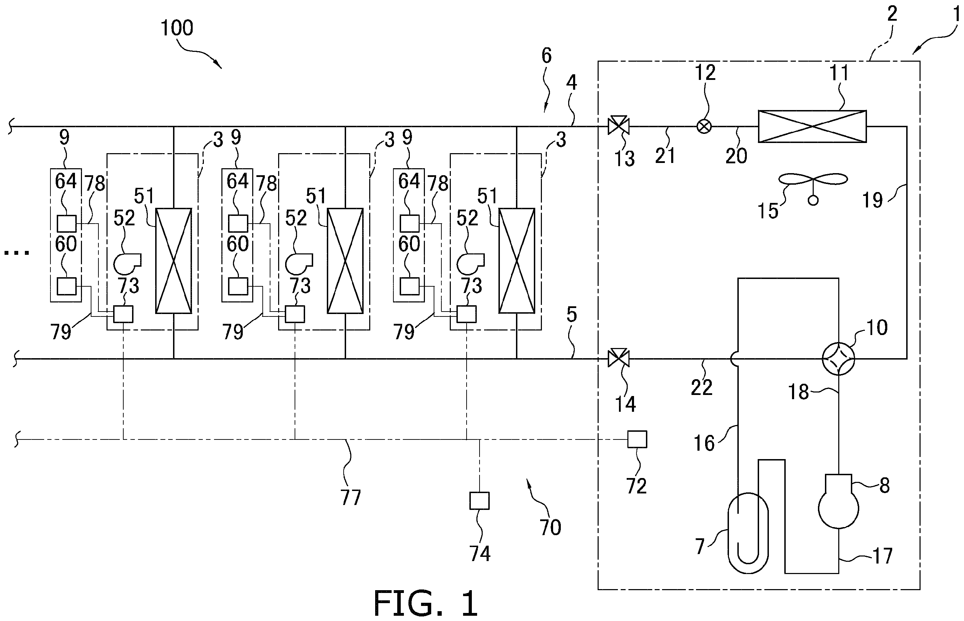

FIG. 1 is a schematic configuration diagram of an air-conditioning light-emitting system 100.

The air-conditioning light-emitting system 100 includes an air conditioner 1 that air-conditions a target space, and a plurality of light emitting units 9 that illuminate the target space air-conditioned by the air conditioner 1.

### (2) Air conditioner

The air conditioner 1 is a device capable of performing cooling and heating of a room of a building or the like by performing a vapor compression refrigeration cycle.

The air conditioner 1 mainly includes an outdoor unit 2, a plurality of indoor units 3, and a liquid-refrigerant connection pipe 4 and a gas-refrigerant connection pipe 5 which are both refrigerant paths connecting the outdoor unit 2 and the plurality of indoor units 3. In addition, a refrigerant circuit 6 of a vapor compression type included in the air conditioner 1 is constituted by connection of the plurality of indoor units 3 to the outdoor unit 2 in parallel via the refrigerant connection pipes 4 and 5. The refrigerant connection pipes 4 and 5 are refrigerant pipes constructed at a site when the air conditioner 1 is installed at an installation location such as a building. According to the present embodiment, the refrigerant circuit 6 is filled with R32 as an operating refrigerant. However, other configurations may be adopted.

### (3) Outdoor unit

The outdoor unit 2 is provided outdoors (e.g., on a rooftop of a building or near a wall surface of a building), and forms a part of the refrigerant circuit 6. The outdoor unit 2 mainly includes an accumulator 7, a compressor 8, a four-way switching valve 10, an outdoor heat exchanger 11, an outdoor expansion valve 12 as an expansion mechanism, a liquid-side shutoff valve 13, a gas-side shutoff valve 14, an outdoor fan 15, and an outdoor control unit 72.

The accumulator 7 is a container used for supply of a gas refrigerant to the compressor, and is provided on the suction side of the compressor 8.

The compressor 8 sucks a low-pressure gas refrigerant, compresses the low-pressure gas refrigerant into a high-pressure gas refrigerant, and discharges the high-pressure gas refrigerant.

The outdoor heat exchanger 11 is a heat exchanger that functions as a radiator of a refrigerant discharged from the compressor 8 during a cooling operation, and functions as an evaporator of a refrigerant sent from an indoor heat exchanger 51 during a heating operation. The liquid side of the outdoor heat exchanger 11 is connected to the outdoor expansion valve 12, and the gas side is connected to the four-way switching valve 10.

The outdoor expansion valve 12 is an electric expansion valve capable of decompressing a refrigerant which has radiated heat at the outdoor heat exchanger 11 before sent to the indoor heat exchanger 51 during the cooling operation, and decompressing a refrigerant which has radiated heat at the indoor heat exchanger 51 before sent to the outdoor heat exchanger 11 during the heating operation.

One end of the liquid-refrigerant connection pipe 4 is connected to the liquid-side shutoff valve 13 of the outdoor unit 2. One end of the gas-refrigerant connection pipe 5 is connected to the gas-side shutoff valve 14 of the outdoor unit 2.

Respective components and valves of the outdoor unit 2 are connected by refrigerant pipes 16 to 22.

The four-way switching valve 10 switches between a connection state for a cooling operation and a connection state for a heating operation described below by switching between a state where connection between the discharge side of the compressor 8 and the outdoor heat exchanger 11, and connection between the suction side of the compressor 8 and the gas-side shutoff valve 14 are made (see solid lines of the four-way switching valve 10 in FIG. 1), and a state where connection between the discharge side of the compressor 8 and the gas-side shutoff valve 14, and connection between the suction side of the compressor 8 and the outdoor heat exchanger 11 are made (see broken lines of the four-way switching valve 10 in FIG. 1).

The outdoor fan 15 is disposed inside the outdoor unit 2 and forms an air flow where outdoor air is sucked, supplied to the outdoor heat exchanger 11, and then discharged to the outside of the unit. In this manner, the outdoor air supplied by the outdoor fan 15 is used as a cooling source or a heating source for heat exchange with a refrigerant of the outdoor heat exchanger 11.

The outdoor control unit 72 provided in the outdoor unit 2 constitutes a part of the control unit 70 by communicable connection to an indoor control unit 73 described below, and includes a CPU, a ROM, a RAM, and the like. The outdoor control unit 72 controls a drive frequency of the compressor 8, a connection state of the four-way switching valve 10, an opening degree of the outdoor expansion valve 12, and an air volume of the outdoor fan 15.

### (4) Indoor unit

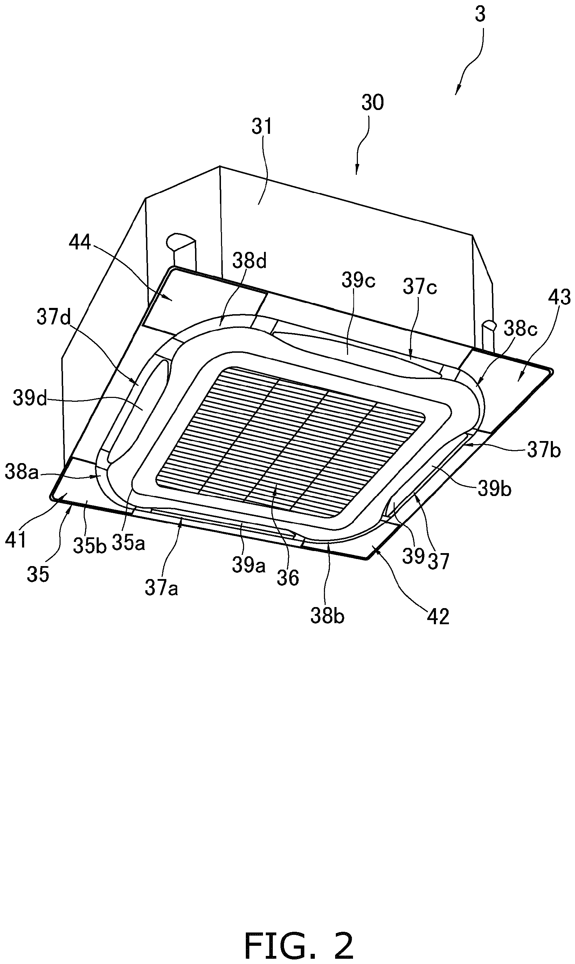

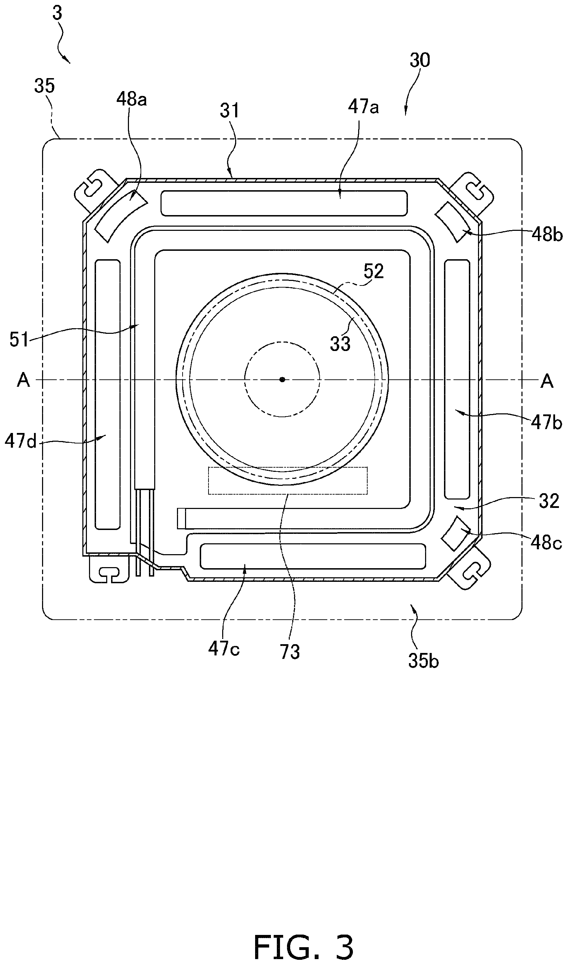

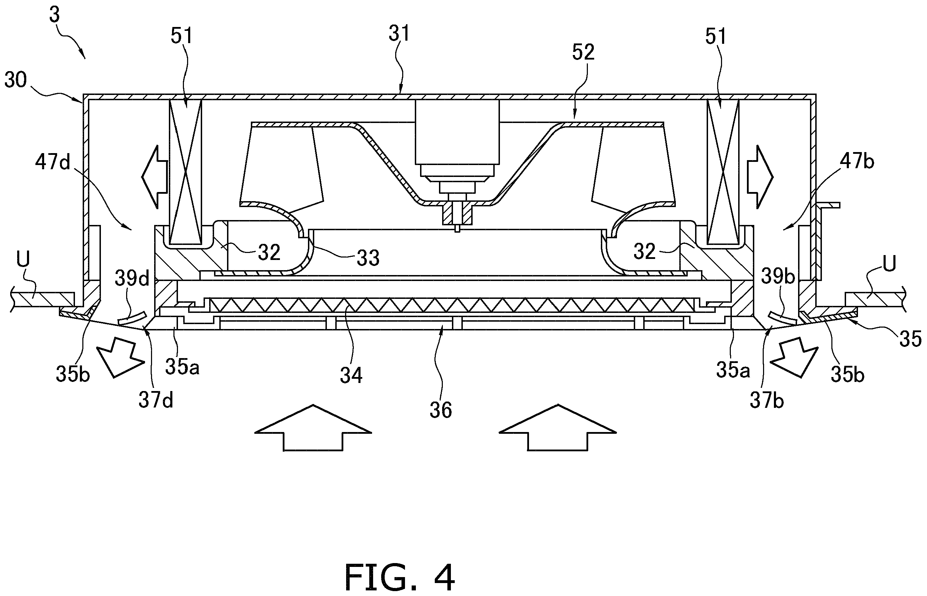

FIG. 2 is an external perspective view of the indoor unit 3. FIG. 3 is a schematic plan view showing a state of the indoor unit 3 where a top panel is removed. FIG. 4 is a schematic side cross-sectional view of the indoor unit 3 taken along a cross section indicated by A-A in FIG. 3.

According to the present embodiment, the indoor unit 3, that is an air conditioning unit, is an indoor unit of a type embedded in an opening formed in a ceiling of a room or the like that is an air-conditioning target space when installed, for example. A plurality of the indoor units 3 formed in the ceiling are spaced apart from each other at a predetermined interval. Each of the indoor units 3 receives supply of power by connection to a power supply source (not shown) via a space above the ceiling. Note that all of the indoor units 3 included in the air conditioner 1 have the same configuration. Accordingly, only one of the indoor units 3 will be described below.

The indoor unit 3 mainly includes the indoor heat exchanger 51, an indoor fan 52, an indoor casing 30, a flap 39, a bell mouth 33, a drain pan 32, and the indoor control unit 73.

The indoor heat exchanger 51 is a heat exchanger that functions as an evaporator of a refrigerant sent from the outdoor heat exchanger 11 during the cooling operation, and functions as a radiator of a refrigerant discharged from the compressor 8 during the heating operation. The liquid side of the indoor heat exchanger 51 is connected to an indoor-side end of the liquid-refrigerant connection pipe 4, and the gas side of the indoor heat exchanger 51 is connected to an indoor-side end of the gas-refrigerant connection pipe 5.

The indoor fan 52 is a centrifugal fan arranged inside a casing main body 31 of the indoor unit 3. The indoor fan 52 forms an air flow where indoor air is sucked into the indoor casing 30 through a suction port 36 of a decorative panel 35 described later, passes through the indoor heat exchanger 51, and then is discharged through a blow-out port 37 of the decorative panel 35 to the outside of the indoor casing 30. In this manner, the temperature of the indoor air supplied by the indoor fan 52 is controlled by exchanging heat with the refrigerant of the indoor heat exchanger 51.

The indoor casing 30 mainly has the casing main body 31 and the decorative panel 35.

The casing main body 31 is so arranged as to be inserted into an opening formed in a ceiling U of a room that is an air-conditioning target space, and has a substantially octagonal box-shaped body which has long sides and short sides alternately disposed in the plan view, and has an open lower surface. The casing main body 31 has a top panel, and a plurality of side plates extending downward from a peripheral edge of the top panel. Note that bolts (not shown) for fixing the indoor unit 3 to the ceiling are fixed to the short sides at four corners of the casing main body 31 in the plan view. Note that a clearance between an upper surface of the decorative panel 35 of the indoor unit 3 and a lower surface of the ceiling can be eliminated by controlling heights of the fixing positions of the respective four corners with respect to the bolts.

The decorative panel 35 is disposed in such a position as to be fitted into the opening of the ceiling U, extends to the outside of the top panel and the side plates of the casing main body 31 in the plan view, and is attached to a lower part of the casing main body 31 from the indoor-side. The decorative panel 35 has an inner frame 35a and an outer frame 35b. A substantially quadrangular-shaped suction port 36 opened downward is formed inside the inner frame 35a. A filter 34 is provided above the suction port 36 to remove dust from air sucked through the suction port 36. The blow-out port 37 and a corner blow-out port 38 opened diagonally downward from below are formed inside the outer frame 35b and outside the inner frame 35a. The blow-out port 37 includes a first blow-out port 37a, a second blow-out port 37b, a third blow-out port 37c, and a fourth blow-out port 37d formed at positions corresponding to respective sides of the substantially quadrangular shape of the decorative panel 35 in the plan view. The corner blow-out port 38 includes a first corner blow-out port 38a, a second corner blow-out port 38b, a third corner blow-out port 38c, and a fourth corner blow-out port 38d formed at positions corresponding to the four corners of the substantially quadrangular shape of the decorative panel 35 in the plan view. The outer frame 35b has substantially quadrangular inner edge and outer edge in the plan view, and includes a first corner panel 41, a second corner panel 42, a third corner panel 43, and a fourth corner panel 44 in correspondence with respective corners of the outer frame 35b. In the plan view, the first corner panel 41 is provided outside the first corner blow-out port 38a, the second corner panel 42 is provided outside the second corner blow-out port 38b, the third corner panel 43 is provided outside the third corner blow-out port 38c, and the fourth corner panel 44 is provided outside the fourth corner blow-out port 38d. Respective shapes of corner panel bodies of the first to fourth corner panels 41 to 44 are identical to each other. Accordingly, the installation locations of the corner panels 41 to 44 are switchable to each other as appropriate. Note that bolts for fixing the indoor unit 3 to the ceiling are located in spaces above the first to fourth corner panels 41 to 44.

The flap 39 is a member that can change the direction of the air flow passing through the blow-out port 37. The flap 39 includes a first flap 39a disposed at the first blow-out port 37a, a second flap 39b disposed at the second blow-out port 37b, a third flap 39c disposed at the third blow-out port 37c, and a fourth flap 39d disposed at the fourth blow-out port 37d. Each of the flaps 39a to 39d is rotatably supported at a predetermined position of the indoor casing 30.

The drain pan 32 is disposed below the indoor heat exchanger 51, and receives drain water generated by condensation of moisture contained in air at the indoor heat exchanger 51. The drain pan 32 is attached to a lower portion of the casing main body 31. A cylindrical space extending in an up-down direction is formed in the drain pan 32 inside the indoor heat exchanger 51 in the plan view. The bell mouth 33 is disposed in an inner lower part of the space. The bell mouth 33 guides air sucked from the suction port 36 to the indoor fan 52. Furthermore, the drain pan 32 includes a plurality of blow-out channels 47a to 47d and corner blow-out channels 48a to 48c extending in the up-down direction outside the indoor heat exchanger 51 in the plan view. The blow-out channels 47a to 47d have a first blow-out channel 47a communicating with the first blow-out port 37a at a lower end of the first blow-out channel 47a, a second blow-out channel 47b communicating with the second blow-out port 37b at a lower end of the second blow-out channel 47b, a third blow-out channel 47c communicating with the third blow-out port 37c at a lower end of the third blow-out channel 47c, and a fourth blow-out channel 47d communicating with the fourth blow-out port 37d at a lower end of the fourth blow-out channel 47d. The corner blow-out channels 48a to 48c have a first corner blow-out channel 48a communicating with the first corner blow-out port 38a at a lower end of the first corner blow-out channel 48a, a second corner blow-out channel 48b communicating with the second corner blow-out port 38b at a lower end of the second corner blow-out channel 48b, and a third corner blow-out channel 48c communicating with the third corner blow-out port 38c at a lower end of the third corner blow-out channel 48c.

The indoor control unit 73 constitutes a part of the control unit 70 by communicable connection to the outdoor control unit 72, and a light source board 60a of a collective unit 60 and a remote control board 74a of a remote controller 74, each of which will be described below, and includes a CPU, a ROM, a RAM, and the like. The indoor control unit 73 controls an air volume of the indoor fan 52. In addition, the indoor control unit 73 recognizes detection information obtained by a human detection sensor 64 described below.

### (5) Light emitting unit

According to the present embodiment, the plurality of light emitting units 9 are provided in correspondence with the respective indoor units 3 of the air conditioner 1. Specifically, in the present embodiment, the light emitting units 9 and the indoor units 3 are electrically connected with one-to-one correspondence. Accordingly, the plurality of light emitting units 9 formed in the ceiling are spaced apart from each other at a predetermined interval similarly to the indoor units 3. Note that all of the plurality of light emitting units 9 have the same configuration. Accordingly, only one of the light emitting units 9 will be described below.

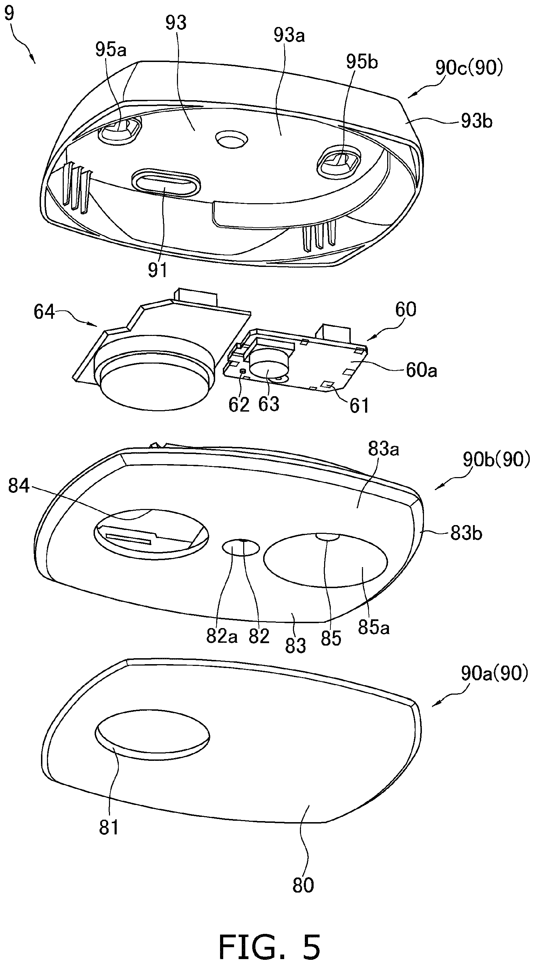

FIG. 5 is a schematic exploded perspective view of the light emitting unit 9.

The light emitting unit 9 is fixed to a ceiling of a target space such as a room during use, and includes the collective unit 60, the human detection sensor 64, a unit casing 90, a light source electric wire 78, a human detection electric wire 79, and the like.

### (5-1) Collective unit

The collective unit 60 is a unit constituted by a plurality of electronic components for detecting illuminance of the target space and emitting light and/or sound, and includes the light source board 60a, an LED 61 mounted on the light source board 60a, an illuminance sensor 62, and a buzzer 63. The collective unit 60 is housed inside the unit casing 90.

The light source board 60a is a control board connected to the indoor control unit 73 located inside the casing main body 31 of the indoor unit 3 via the light source electric wire 78, and includes a CPU, a ROM, a RAM, and the like. The light source electric wire 78 includes a power source supply line and a communication line which are wired lines. Specifically, the light source board 60a is capable of communicating with the indoor control unit 73 via a communication line of the light source electric wire 78 while receiving power supply from the indoor control unit 73 via a power source supply line of the light source electric wire 78. The light source board 60a on which the LED 61, the illuminance sensor 62, and the buzzer 63 are mounted is housed inside the unit casing 90 described below. Note that the LED 61, the illuminance sensor 62, and the buzzer 63 are all mounted on the common light source board 60a. Accordingly, boards can be integrated into one board to achieve size reduction.

The LED 61 is a light emitting diode mounted on a lower surface of the light source board 60a, and illuminating an area which is an air-conditioning target of the indoor unit 3. Specifically, the LED 61 is so installed as to allow light emitted downward to pass through a light emitting opening 85 and a cover lens 90a of the unit casing 90 described below, and illuminate a specific area. The LED 61 included in each of the light emitting units 9 illuminates a corresponding area.

The illuminance sensor 62 is mounted on the lower surface of the light source board 60a, and detects illuminance of a specific area which is a main air-conditioning target of the indoor unit 3 from which a power source is supplied to the light source board 60a. For example, the illuminance sensor 62 is constituted by a phototransistor or the like. However, other configurations may be adopted. The illuminance sensor 62 detects illumination (light) which is illumination in a specific area in the room, and has passed through a central opening 82 of the unit casing 90 described below. Each of the illuminance sensors 62 included in the respective light emitting units 9 detects illuminance in the corresponding space.

The buzzer 63 is mounted on the lower surface of the light source board 60a, and emits sound toward the area which is an air-conditioning target of the indoor unit 3. Specifically, the buzzer 63 emits warning sound in such a manner as to repeatedly output the same sound at predetermined time intervals. The buzzer 63 is so installed as to allow sound emitted downward to pass through the central opening 82 of the unit casing 90 described below, and reach the specific area in the room. Each of the buzzers 63 included in the respective light emitting units 9 emits sound to the corresponding area.

### (5-2) Human detection sensor

The human detection sensor 64 is a sensor that detects the presence or absence of a human in a specific area which is an air-conditioning target of the indoor unit 3 as a detection target space, and is constituted by an infrared camera or the like, for example. However, other configurations may be adopted. Note that the human detection sensor 64 included in each of the light emitting units 9 detects the presence or absence of a human in the corresponding detection area. The human detection sensor 64 is housed inside the unit casing 90 at a height similar to a height of the collective unit 60. A part of the human detection sensor 64 is so provided as to protrude toward the target space via a lower human detection opening 84 and a lens portion human detection opening 81 of the unit casing 90 described below. The human detection sensor 64 is connected to the indoor control unit 73 located inside the casing main body 31 of the indoor unit 3 via the human detection electric wire 79. The human detection electric wire 79 includes a power source supply line and a communication line which are wired lines. Specifically, the human detection sensor 64 is capable of transmitting a human detection result to the indoor control unit 73 via the communication line of the human detection electric wire 79 while receiving power supply from the indoor control unit 73 via the power source supply line of the human detection electric wire 79.

### (5-3) Unit casing

The unit casing 90 is a container that houses the collective unit 60 and the human detection sensor 64 inside, and has the cover lens 90a, a lower casing 90b, and an upper casing 90c. The collective unit 60 and the human detection sensor 64 are housed in the unit casing 90 in such a condition as to be sandwiched from above and below, that is, from above (ceiling side) using the upper casing 90c, and from below (target space side) using the lower casing 90b in the installed state of the light emitting unit 9. The cover lens 90a is attached to the lower casing 90b from below to constitute an indoor-side portion of the light emitting unit 9.

The upper casing 90c is a semitransparent resin casing used for installation of the light emitting unit 9 in the ceiling, and covering the collective unit 60 and the human detection sensor 64 from above. The upper casing 90c has an upper casing main body 93, a wiring opening 91, a first fixing screw hole 95a, and a second fixing screw hole 95b. The upper casing main body 93 has a top surface 93a and an upper side surface 93b. The top surface 93a is a plate-shaped member having a substantially quadrangular shape in the plan view, and constitutes an upper end surface of the light emitting unit 9. The upper side surface 93b extends in such a shape as to expand diagonally downward from a peripheral edge of the top surface 93a, and constitutes an upper side surface of the light emitting unit 9. The wiring opening 91 is an opening penetrating the top surface 93a near a back surface in a plate thickness direction that is the up-down direction, and is an opening through which the light source electric wire 78 and the human detection electric wire 79 pass. The first fixing screw hole 95a and the second fixing screw hole 95b are formed in the top surface 93a at positions apart from each other on the side opposite to the side where the wiring opening 91 is provided (near a front surface), and are openings penetrating in the plate thickness direction that is the up-down direction, and provided to fix the upper casing 90c and thus the light emitting unit 9 to a wall surface such as a ceiling by insertion of screws (not shown) into the openings. Note that a hole formed in a wall such as a ceiling on which the light emitting unit 9 is constructed is opened at a position corresponding to a position where the wiring opening 91 is formed. The light source electric wire 78 and the human detection electric wire 79 are routed behind the ceiling or the wall surface through this hole in the wall.

The lower casing 90b is a semitransparent resin casing which houses the collective unit 60 and the human detection sensor 64 inside while covering these components from below. The lower casing 90b has a lower casing main body 83 that extends substantially in a horizontal direction, the central opening 82, the lower human detection opening 84, the light emitting opening 85, and a light emitting path surface 85a. The lower casing main body 83 has a shape corresponding to a contour of the upper casing 90c in the plan view. The lower casing main body 83 has a main surface 83a and a lower side surface 83b. The main surface 83a is a plate-shaped member having a substantially quadrangular shape in the plan view, and extends substantially in the horizontal direction. The lower side surface 83b slightly extends upward from a peripheral edge of the main surface 83a. While not described in detail, the lower casing 90b and the upper casing 90c have a shape relationship fittable to each other. The central opening 82 is an opening penetrating in the up-down direction near the center of the main surface 83a of the lower casing main body 83 in the plan view. A central opening wall surface 82a having a cylindrical shape and formed in such a shape as to expand toward the lower side is formed below the central opening 82. The central opening 82 is so formed that the illuminance sensor 62 and the buzzer 63 are located above the central opening 82 in a state of installation of the collective unit 60. The lower human detection opening 84 is an opening formed in the main surface 83a of the lower casing main body 83 at a position different from the central opening 82 in the plan view, and penetrating in the up-down direction. The light emitting opening 85 is an opening formed in the main surface 83a of the lower casing main body 83 on the side opposite to the lower human detection opening 84 with respect to the central opening 82 in the plan view, and penetrating in the up-down direction. When the collective unit 60 is housed at a predetermined position of the main surface 83a of the lower casing main body 83, the LED 61 is located above the light emitting opening 85. In addition, the illuminance sensor 62 and the buzzer 63 are located above the central opening 82. Note that the light emitting path surface 85a is a cylindrical portion formed below the light emitting opening 85 and so shaped as to expand downward.

The cover lens 90a is a transparent resin lens fixed to a lower surface of the lower casing 90b. The cover lens 90a has a cover lens main body 80 that extends substantially in the horizontal direction, and the lens portion human detection opening 81. The cover lens main body 80 has a shape corresponding to a contour of a lower surface of the main surface 83a of the lower casing 90b in the plan view.

### (6) Remote controller

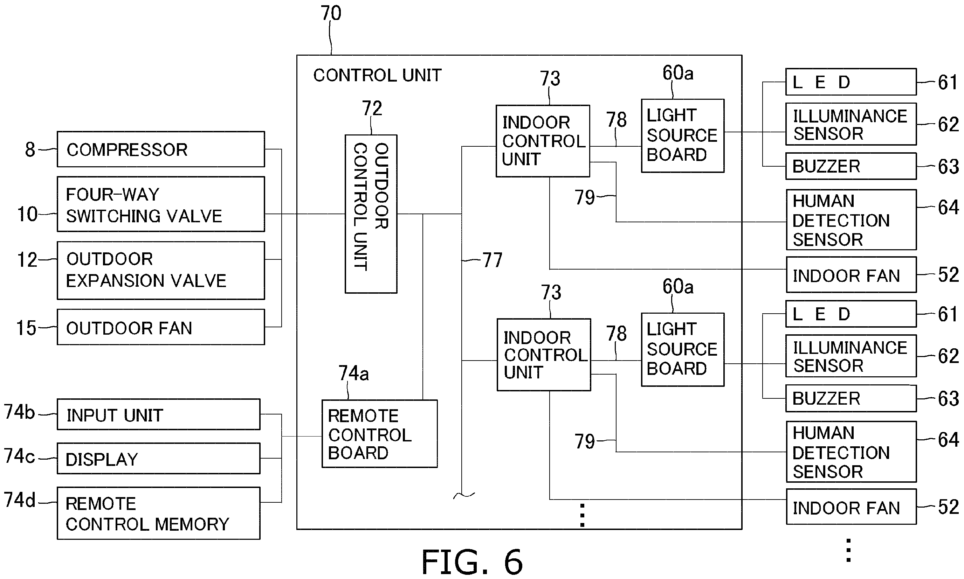

FIG. 6 is a control block configuration diagram of the air-conditioning light-emitting system 100.

The remote controller 74 is provided in the target space to be air-conditioned by the indoor unit 3.

The remote controller 74 is communicably connected to the outdoor control unit 72 and the indoor control unit 73, and includes the remote control board 74a having a CPU, a ROM, a RAM, and the like, an input unit 74b, a display 74c, and a remote control memory 74d.

The input unit 74b receives various settings from a user.

The display 74c is capable of outputting a display such as an operation state of the air conditioner 1, a set temperature, an abnormal state, and the like.

The remote control memory 74d stores position information indicating an installation positional relationship between the plurality of indoor units 3 included in the air conditioner 1. This positional information can be input via the input unit 74b.

### (7) Control unit

The air conditioner 1 has the control unit 70 constituted by the outdoor control unit 72, the remote control board 74a, the indoor control unit 73, and the light source board 60a.

Specifically, the outdoor control unit 72 is so connected as to control the compressor 8, the four-way switching valve 10, the outdoor expansion valve 12, the outdoor fan 15, and the like. The indoor control unit 73 is capable of receiving signals from the human detection sensor 64 and various signals from the light source board 60a, and is so connected as to control the indoor fan 52. The light source board 60a is capable of receiving signals from the illuminance sensor 62, and is so connected as to control the LED 61, the buzzer 63, and the like. Note that the respective indoor control units 73 each included in the corresponding indoor unit 3 are connected to each other via an indoor communication line 77 which is a wired line. In addition, each of the indoor control units 73 is connected to the corresponding light emitting unit 9 via the light source electric wire 78 and the human detection electric wire 79. The remote control board 74a is capable of receiving signals from the input unit 74b, and is so connected as to allow the display 74c to output various types of display.

The control unit 70 executes various control operations and information processing of the air conditioner 1.

### (8) Operation of air conditioner

Next, an operation of the air conditioner 1 will be described with reference to FIG. 1. The air conditioner 1 performs a cooling operation where a refrigerant passes through the compressor 8, the outdoor heat exchanger 11, the outdoor expansion valve 12, and the indoor heat exchanger 51 in that order, and a heating operation where a refrigerant passes through the compressor 8, the indoor heat exchanger 51, the outdoor expansion valve 12, and the outdoor heat exchanger 11 in that order.

### (8-1) Cooling operation

During the cooling operation, a connection state of the four-way switching valve 10 is switched to such a state that the outdoor heat exchanger 11 functions as a refrigerant radiator, and that the indoor heat exchanger 51 functions as a refrigerant evaporator (see solid lines in FIG. 1). In the refrigerant circuit 6, a low-pressure gas refrigerant of the refrigeration cycle is sucked into the compressor 8, and discharged after compressed to a high-pressure refrigerant of the refrigeration cycle. The high-pressure gas refrigerant discharged from the compressor 8 is sent to the outdoor heat exchanger 11 through the four-way switching valve 10. The high-pressure gas refrigerant sent to the outdoor heat exchanger 11 radiates heat by heat exchange with outdoor air supplied as a cooling source by the outdoor fan 15 at the outdoor heat exchanger 11 functioning as a radiator of the refrigerant, and becomes a high-pressure liquid refrigerant. This high-pressure liquid refrigerant is decompressed to a low pressure of the refrigeration cycle while passing through the outdoor expansion valve 12. The decompressed refrigerant becomes a gas-liquid two-phase state refrigerant, and is sent to each of the indoor units 3 through the liquid-side shutoff valve 13 and the liquid-refrigerant connection pipe 4.

The low-pressure refrigerant in the gas-liquid two-phase state evaporates in each of the indoor heat exchangers 51 by heat exchange with indoor air supplied as a heating source by the indoor fan 52 during the cooling operation. In this manner, the air passing through the indoor heat exchangers 51 is cooled to achieve cooling of the room. The low-pressure gas refrigerants evaporated at the respective indoor heat exchangers 51 join each other, and the joined gas refrigerant is sent to the outdoor unit 2 through the gas-refrigerant connection pipe 5.

The low-pressure gas refrigerant sent to the outdoor unit 2 is again sucked into the compressor 8 through the gas-side shutoff valve 14, the four-way switching valve 10, and the accumulator 7. In the cooling operation, the refrigerant circulates through the refrigerant circuit 6 in the manner described above.

### (8-2) Heating operation

During the heating operation, the connection state of the four-way switching valve 10 is switched to such a state that the outdoor heat exchanger 11 functions as a refrigerant evaporator, and that the indoor heat exchanger 51 functions as a refrigerant radiator (see broken lines in FIG. 1). In the refrigerant circuit 6, a low-pressure gas refrigerant of the refrigeration cycle is sucked into the compressor 8, and discharged after compressed to a high-pressure refrigerant of the refrigeration cycle. The high-pressure gas refrigerant discharged from the compressor 8 is sent to each of the indoor units 3 via the four-way switching valve 10, the gas-side shutoff valve 14, and the gas-refrigerant connection pipe 5.

The high-pressure gas refrigerant radiates heat by heat exchange with indoor air supplied as a cooling source by the indoor fan 52 at each of the indoor heat exchangers 51, and becomes a high-pressure liquid refrigerant. In this manner, the air passing through the indoor heat exchangers 51 is heated to achieve heating of the room. The high-pressure liquid refrigerants having radiated heat at the respective indoor heat exchangers 51 join each other, and the joined refrigerant is sent to the outdoor unit 2 through the liquid-refrigerant connection pipe 4.

The high-pressure liquid refrigerant sent to the outdoor unit 2 is decompressed to a low pressure of the refrigeration cycle at the outdoor expansion valve 12 through the liquid-side shutoff valve 13, and becomes a low-pressure refrigerant in a gas-liquid two-phase state. The low-pressure refrigerant in the gas-liquid two-phase state decompressed at the outdoor expansion valve 12 evaporates in the outdoor heat exchanger 11 functioning as a refrigerant evaporator by heat exchange with outdoor air supplied as a heating source by the outdoor fan 15, and becomes a low-pressure gas refrigerant. This low-pressure gas refrigerant is again sucked into the compressor 8 through the four-way switching valve 10 and the accumulator 7. In the heating operation, the refrigerant circulates through the refrigerant circuit 6 in the manner described above.

### (9) LED and buzzer control

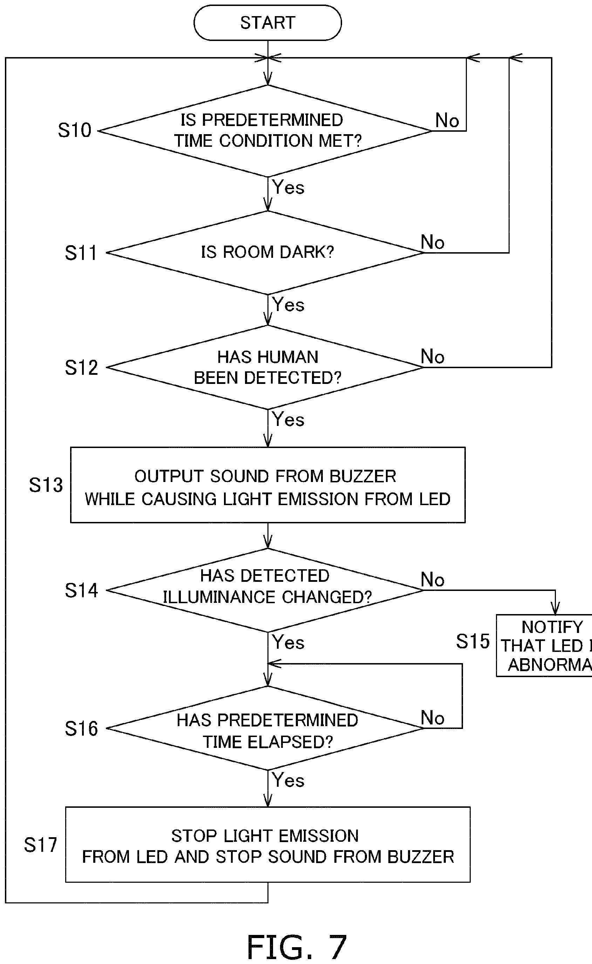

FIG. 7 is a control flowchart of the LED 61 and the buzzer 63.

Described herein is control of the LED 61 and the buzzer 63, as control performed between each of the indoor units 3 and the light emitting unit 9 directly connected to the corresponding indoor unit 3. While processing performed by the indoor control unit 73 included in each of the indoor units 3 is mainly described hereinafter, each of the indoor control units 73 provided in correspondence with the plurality of indoor units 3 performs similar processing.

In step S10, the indoor control unit 73 determines whether or not a predetermined time condition is met. This predetermined time condition is not limited to a specific condition. For example, the predetermined time condition may be a condition of a predetermined time zone of a day, and is stored in advance in a memory or the like included in the indoor control unit 73. Note that the user can set the predetermined time condition via the input unit 74b of the remote controller 74. In this manner, lighting of the LED 61 and output of warning sound from the buzzer 63 are achievable only in a specific time zone, for example, thereby producing a crime prevention effect in the specific time zone. When it is determined that the predetermined time condition is met herein, the process proceeds to step S11. When it is determined that the predetermined time condition is not met, step S10 is repeated.

In step S11, the indoor control unit 73 recognizes an illuminance value detected by the illuminance sensor 62 from the light source board 60a to which the indoor control unit 73 is connected via the light source electric wire 78, compares this illuminance value with predetermined illuminance, and thereby determines whether or not the illuminance value is equal to or less than the predetermined illuminance determined beforehand. When it is determined that the illuminance value is equal to or less than the predetermined illuminance (dark), the process proceeds to step S12. When it is determined that the illuminance value is not equal to or less than the predetermined illuminance (not dark), step S10 is repeated.

In step S12, the indoor control unit 73 receives a detection signal from the human detection sensor 64 to which the indoor control unit 73 is connected via the human detection electric wire 79, and thereby determines the presence or absence of a human in a detection target area of the human detection sensor 64. Note that the detection target areas of the human detection sensors 64 included in the respective light emitting units 9 are so defined as to reduce overlaps between each other. When the presence of a human is determined, the process proceeds to step S13. When the absence of a human is determined, the process returns to step S10.

In step S13, the indoor control unit 73 determines that the light emission condition during control (steps S10 to S12) is met, and transmits a signal for causing light emission from the LED 61 and a signal for causing warning sound output from the buzzer 63. Specifically, the indoor control unit 73 transmits a control signal for causing light emission from the LED 61 via the light source electric wire 78, and a control signal for causing warning sound output from the buzzer 63 via the light source electric wire 78 to the light source board 60a to which the indoor control unit 73 is connected via the light source electric wire 78. In this manner, the light source board 60a having received these control signals controls the LED 61 and the buzzer 63 such that the LED 61 emits light and that the buzzer 63 emits warning sound.

In step S14, the indoor control unit 73 determines whether or not the illuminance detected by the illuminance sensor 62 mounted on the light source board 60a to which the indoor control unit 73 is connected via the light source electric wire 78 has changed. Specifically, the indoor control unit 73 determines whether or not the illuminance detected by the illuminance sensor 62 has changed after transmission of the control signal for causing light emission from the LED 61 in step S13. When it is determined that the illuminance detected by the illuminance sensor 62 has changed, the process proceeds to step S16. When it is determined that the illuminance does not change, the process proceeds to step S15.

In step S15, the indoor control unit 73 determines that the LED 61 is abnormal, and causes the display 74c of the remote controller 74 to output a display of a predetermined abnormality code indicating that the LED 61 is abnormal while specifying the light emitting unit 9 including the corresponding LED 61.

In step S16, the indoor control unit 73 determines whether or not a predetermined time has elapsed since transmission of the control signals for causing light emission from the LED 61 and warning sound output from the buzzer 63. The predetermined time is not limited to a specific time herein. For example, the predetermined time may be a predetermined time length of 1 minute or longer and shorter than 5 minutes. When it is determined that the predetermined time has elapsed, the process proceeds to step S17. When it is determined that the predetermined time has not elapsed yet, light emission from the LED 61 and warning sound output from the buzzer 63 are continued until an elapse of the predetermined time.

In step S17, the indoor control unit 73 stops light emission from the LED 61, and also stops warning sound output from the buzzer 63. Thereafter, the process returns to step S10, and repeats the above processing.

### (10) Linked control of light emitting unit

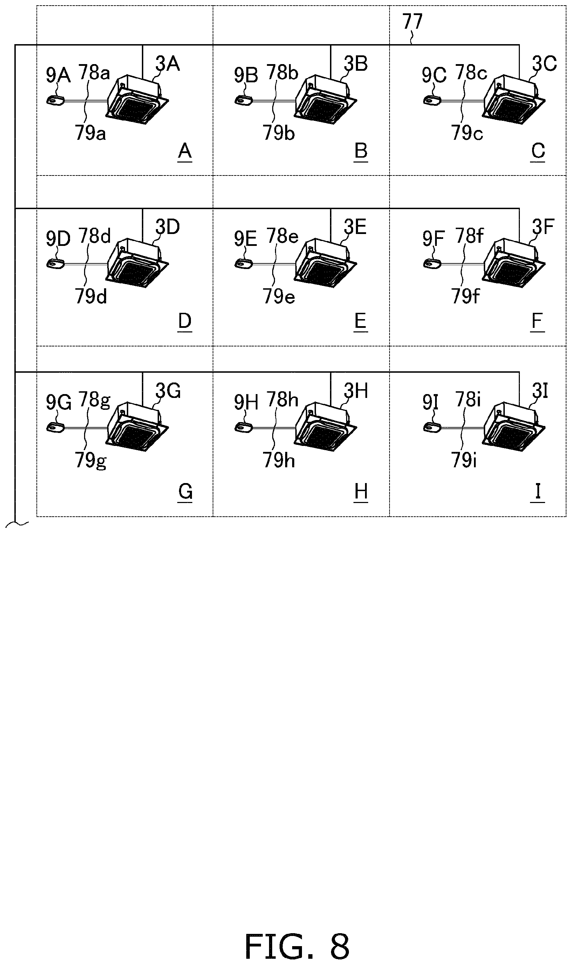

FIG. 8 shows an arrangement example of the plurality of indoor units 3, and the light emitting units 9 connected to the respective indoor units 3 on a ceiling or the like of a target space.

Hereinafter described will be indoor units 3A to 3I to distinguish between the plurality of indoor units 3 for convenience of description, and light emitting units 9A to 9I to similarly distinguish between the plurality of light emitting units 9. Moreover, as for the light source electric wires 78 and the human detection electric wires 79, light source electric wires 78a to 78i will be described to distinguish between the respective light source electric wires 78, and human detection electric wires 79a to 79i will be described to distinguish between the respective human detection electric wires 79.

According to the present embodiment, the indoor units 3A to 3I formed on a ceiling or the like of a target space are spaced apart from each other at a predetermined interval. In addition, the light emitting units 9A to 9I connected to the respective indoor units 3A to 3I and formed on the ceiling or the like of the target space are also spaced apart from each other with an interval similar to the interval between the indoor units 3A to 31. (The indoor control units 73 of) the indoor units 3A to 3I herein are connected to each other via the indoor communication line 77 which is a wired line. Further, (the respective indoor control units 73 of) the indoor units 3A to 3I and the light emitting units 9A to 9I are respectively connected to each other via the corresponding light source electric wire 78a to 78i and the corresponding human detection electric wire 79a to 79i. The indoor units 3A to 3I and the light emitting units 9A to 9I to which corresponding alphabetical suffixes are given herein have a closest arrangement relationship (that is, the indoor unit 3 arranged closest to the light emitting unit 9"A" is the indoor unit 3"A"). In addition, as shown in FIG. 8, it is assumed that the indoor units 3A to 3I and the light emitting units 9A to 9I to which corresponding alphabetical suffixes are given perform air-conditioning, light emission, detection, and the like for corresponding targets of spaces A to I to which the corresponding suffixes are given.

While the control contents of the LED 61 and the buzzer 63 focused on one of the light emitting units 9 have been described above, the different light emitting units 9 are controllable in linkage with control of one of the light emitting units 9 according to the present air-conditioning light-emitting system 100. The control of the LED 61 and the buzzer 63 described above, and linked control described below are thus simultaneously processed. Note that the air-conditioning light-emitting system 100 may be configured to switch this linked control between an execution state and a non-execution state as requested by the user, for example.

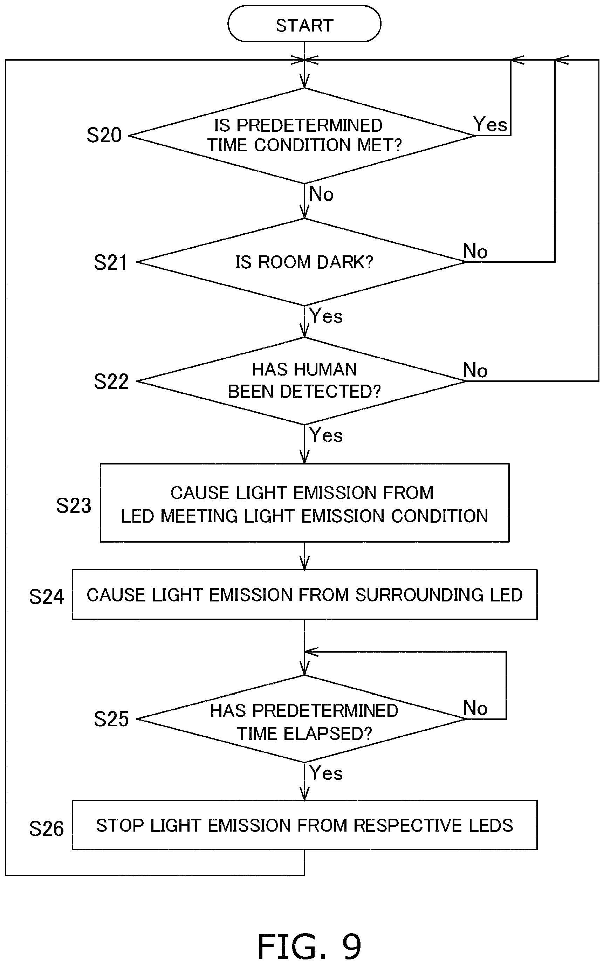

Specifically, when a predetermined condition is met, a linked light emission process is also performed for the LEDs 61 of the different light emitting units 9 (e.g., the light emitting units 9B, 9D, and 9E) arranged adjacent to the light emitting unit 9 that detects a human and causes light emission from the LED 61 (e.g., the light emitting unit 9A) in the light emitting units 9A to 9I in accordance with a flowchart shown in FIG. 9. Hereinafter described will be a case where the indoor control unit 73 of the indoor unit 3A makes a determination of processing. However, the same is applicable to the indoor control units 73 of the other indoor units 3B to 31.

In step S20, the indoor control unit 73 of the indoor unit 3A determines whether or not a predetermined time condition is met similarly to step S10 described above. When it is determined herein that the predetermined time condition is not met, that is, when the current time zone is a time zone not meeting a predetermined time condition, such as a time zone other than a specific crime prevention measures time zone, for example, the process proceeds to step S21. When it is determined that the predetermined time condition is met, step S20 is repeated.

In step S21, the indoor control unit 73 of the indoor unit 3A determines whether or not detected illuminance of the illuminance sensor 62 mounted on the light source board 60a of the light emitting unit 9A to which the indoor control unit 73 is connected via the light source electric wire 78 is equal to or less than the predetermined illuminance determined beforehand. In this manner, illuminance in the space A is determined. When it is determined that the illuminance is equal to or less than the predetermined illuminance (dark), the process proceeds to step S22. When it is determined that the illuminance is not equal to or less than the predetermined illuminance (not dark), step S20 is repeated.

In step S22, the indoor control unit 73 of the indoor unit 3A determines whether or not the human detection sensor 64 of the light emitting unit 9A to which the indoor control unit 73 is connected via the human detection electric wire 79 has detected the presence of a human. In this manner, the presence or absence of a human in the space A is determined. When it is determined that the human detection sensor 64 of the corresponding light emitting unit 9A has detected a human, the process proceeds to step S23. When it is determined that a human has not been detected, the process returns to step S20.

In step S23, the indoor control unit 73 of the indoor unit 3A determines that the light emission condition is met for the LED 61 mounted on the light source board 60a of the light emitting unit 9A to which the indoor control unit 73 is connected via the light source electric wire 78, and transmits a signal for causing light emission from the LED 61 to allow light emission from the LED 61 of the light source board 60a.

In step S24, the indoor control unit 73 of the indoor unit 3A refers to position information associated with each of the indoor units 3A to 3I stored in the remote control memory 74d of the remote controller 74, and transmits a signal notifying the respective indoor control units 73 of the indoor units 3B, 3D, and 3E located in the spaces B, D, and E each meeting a predetermined adjacency condition of a fact that the adjacency condition is met. In this manner, the indoor control units 73 of the indoor units 3B, 3D, and 3E having received this signal forcibly cause light emission respectively from the LEDs 61 included in the light emitting units 9B, 9D, and 9E to which the respective indoor control units 73 are connected (that is, forcibly cause light emission even when the respective indoor control units 73 of the indoor units 3B, 3D, and 3E determine that the light emission condition (meeting the predetermined time condition, having the predetermined illuminance or less, and detecting the presence of a human) is not met. Note that the predetermined adjacency condition is not limited to a specific condition, and may be stored in the remote control memory 74d of the remote controller 74.

In step S25, the indoor control unit 73 of the indoor unit 3A determines whether or not a predetermined time has elapsed since emission of light from the LED 61 in step S23. When it is determined herein that the predetermined time has elapsed, the process proceeds to step S25. When it is determined that the predetermined time has not elapsed yet, step S25 is repeated.

In step S26, the indoor control unit 73 of the indoor unit 3A sends a signal for stopping light emission from the LED 61 caused in step S23 to the light source board 60a of the light emitting unit 9A to stop light emission from the LED 61. In addition, the indoor control unit 73 of the indoor unit 3A transmits a signal for stopping light emission from the corresponding LED 61 to each of the indoor control units 73 of the indoor units 3B, 3D, and 3E located in the spaces B, D, and E to each of which the signal for notification that the adjacency condition is met is transmitted in step 24 to stop light emission from the respective LEDs 61. Thereafter, the process returns to step S20 to repeat processing.

### (11) <Characteristics>

### (11-1)

According to the air-conditioning light-emitting system 100 of the present embodiment, the light emitting unit 9 is connected, via the light source electric wire 78 including a communication line which is a wired line, to each of the plurality of indoor units 3 connected to each other by the indoor communication line 77 which is a wired line such that the indoor units 3 communicate with each other. Therefore, even when the plurality of light emitting units 9 are not connected to each other by communication lines, the plurality of light emitting units 9 are controllable. More specifically, according to the air-conditioning light-emitting system 100 of the present embodiment, the necessity of providing communication lines or the like for connecting the plurality of light emitting units 9 is eliminated. The network used for the plurality of indoor units 3 can also be used for controlling the plurality of light emitting units 9.

### (11-2)

According to the air-conditioning light-emitting system 100 of the present embodiment, the light emitting unit 9 is connected via the light source electric wire 78 including the power source supply line to the indoor control unit 73 of each of the indoor units 3 connected to the power supply source. Accordingly, the plurality of light emitting units 9 can receive power supply from the indoor control unit 73 of the indoor unit 3 which is relatively near without the necessity of connection to an electric supply source via an electric wire even when the electric supply source is located far away from the light emitting units 9.

### (11-3)

According to the air-conditioning light-emitting system 100 of the present embodiment, the plurality of light emitting units 9 are connected to each other via the network of the indoor communication line 77 that connects the plurality of indoor units 3. Accordingly, the plurality of light emitting units 9 are controllable in linkage with each other.

### (12) <Modifications>

### (12-1) Modification A

According to the above embodiment presented by way of example, the collective unit 60 and the human detection sensor 64 are separate bodies, and are connected to the indoor control unit 73 via the communication line and the power source supply lines (the light source electric wire 78 and the human detection electric wire 79).

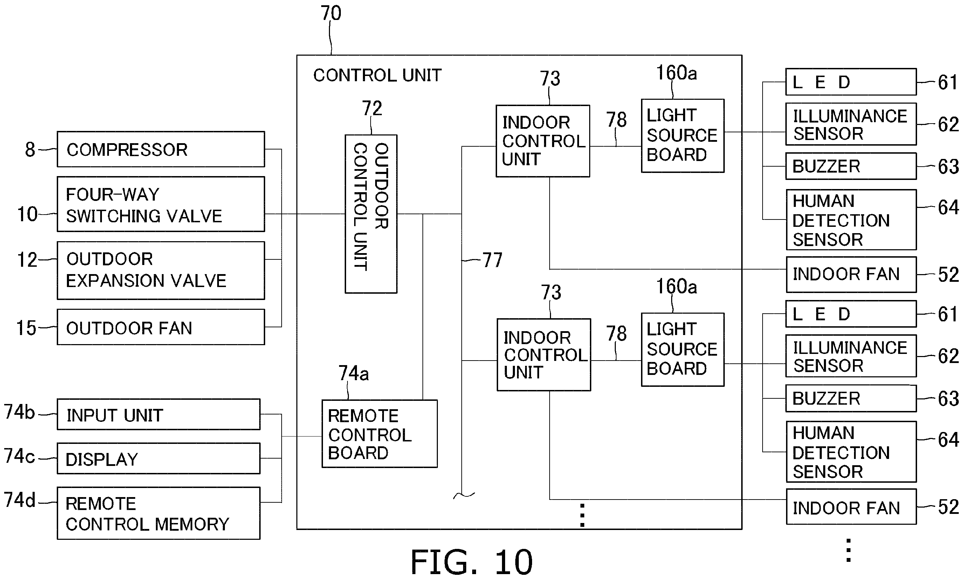

However, as shown in FIG. 10, the LED 61, the illuminance sensor 62, the buzzer 63, and the human detection sensor 64 may be mounted on a light source board 160a which is a common control board. In this case, the light source board 160a and the indoor control unit 73 may be connected to each other via a communication line and a power source supply line (the light source electric wire 78).

### (12-2) Modification B

According to the above embodiment presented by way of example, the LED 61 and the buzzer 63 are mainly controlled by the indoor control unit 73.

However, the collective unit 60 itself may control the LED 61 and the buzzer 63 by determining illuminance detected by the illuminance sensor 62.

Furthermore, for example, when the LED 61, the illuminance sensor 62, the buzzer 63, and the human detection sensor 64 are mounted on the light source board 160a which is a common control board, like the light source board 160a described in Modification A, the light source board 160a of the light emitting unit 9 itself may control the LED 61 and the buzzer 63 based on the detection results obtained from the illuminance sensor 62 and the human detection sensor 64.

### (12-3) Modification C

According to the above embodiment presented by way of example, the indoor control unit 73 is a main unit for performing linked control of the light emitting units 9.

However, for example, when the LED 61, the illuminance sensor 62, the buzzer 63, and the human detection sensor 64 are mounted on the light source board 160a which is a common control board, like the light source board 160a described in Modification A, the light source board 160a of the light emitting unit 9 itself may be a main unit for performing the linked control described in the above embodiment. More specifically, the light source board 160a of the light emitting unit 9 may control light emission from the LED 61 mounted on the light source board 160a, and also transmit a control command for causing light emission from the LEDs 61 of the different light emitting units 9 by linked control via the indoor unit 3 directly connected via the light source electric wire 78, and further via the indoor communication line 77, the other indoor units 3, and the light source electric wires 78 connected to the other indoor units 3 to cause light emission from the LEDs 61 of the surrounding light emitting units 9.

### (12-4) Modification D

According to the above embodiment presented by way of example, all of the plurality of light emitting units 9 have a similar configuration.

However, the plurality of light emitting units 9 may be configured such that the specific light emitting unit 9 is designated as a master device (master light emitting unit), and that the other light emitting units 9 are designated as slave devices (slave light emitting units). The manner of this designation of the master device and the slave device is not limited to a specific manner of designation. For example, this designation may be made via the input unit 74b of the remote controller 74.

In this case, for example, the master light emitting unit 9, which is the master device, may recognize not only detection results obtained by the illuminance sensor 62 and the human detection sensor 64 included in the master light emitting unit 9, but also all detection results obtained by the illuminance sensor 62 and the human detection sensor 64 included in the slave light emitting units 9 which are the other slave devices through communication, and perform control of the LEDs 61 and the buzzers 63 of the master light emitting unit 9 and the other slave light emitting units 9 by using total information containing these detection results. The manner of control of the light emitting units 9 based on this total information is not limited to specific control. For example, when the human detection sensors 64 of a predetermined number or more of the light emitting units 9 detect a human, control such as causing light emission from the LEDs 61 of all of these light emitting units 9 is adoptable. Even in the case of control performed by the light emitting unit 9 as the master device, a network for enabling communication between the respective light emitting units 9 need not be provided separately from the network between the indoor units 3.

Moreover, for example, when a setting of the master light emitting unit 9 is changed using the input unit 74b of the remote controller 74, this setting may be applied to the other slave light emitting units 9. For example, regarding the setting of the predetermined time condition described in step S10 and associated with the control of the LED 61 and the buzzer 63 of the above embodiment, the setting of the predetermined time condition of the master light emitting unit 9 may be applied to the other slave light emitting units 9.

### (12-5) Modification E

According to the above example, which is not covered by the subject-matter of the claims, the one light emitting unit 9 is connected to the one indoor unit 3 via the light source electric wire 78.

However, a plurality of the light emitting units 9 may be connected to the one indoor unit 3 via the light source electric wires 78, or the one light emitting unit 9 may be connected to a plurality of the indoor units 3 via the light source electric wires 78.

### (12-6) Modification F

According to the above embodiment presented by way of example, the plurality of indoor units 3 are connected to each other in such a manner as to communicate with each other via the indoor communication line 77 which is a wired line.

However, the means for communicably connecting the plurality of indoor units 3 is not limited to communication by wire. For example, the plurality of indoor units 3 may be wirelessly connected to each other in such a manner as to communicate with each other. Examples of the wireless communication that connects the plurality of indoor units 3 herein include infrared communication, communication using Bluetooth (registered trademark), communication using Wi-Fi, and the like.

### (12-7) Modification G

According to the above example, which is not covered by the subject-matter of the claims, the indoor units 3 and the light emitting units 9 are connected to each other such that the indoor units 3 communicate with the light emitting units 9 via the light source electric wires 78 which are wired lines.

However, the means for communicably connecting the indoor units 3 and the light emitting units 9 is not limited to communication by wire. For example, the indoor units 3 and the light emitting unit 9 may be wirelessly connected to each other such that the indoor units 3 communicate with the light emitting units 9. Examples of the wireless communication that connects the indoor unit 3 and the light emitting unit 9 herein include infrared communication, communication using Bluetooth (registered trademark), communication using Wi-Fi, and the like. For example, a combination of the indoor unit 3 and the light emitting unit 9 performing mutual wireless communication may be stored in the remote control memory 74d and used for the linked control. Even when the indoor units 3 and the light emitting units 9 are wirelessly connected to each other such that the indoor units 3 communicate with the light emitting units 9 in this manner, the indoor units 3 and the light emitting units 9 which are wirelessly connected to each other preferably have a nearest positional relationship (the light emitting units 9 are wirelessly connected to the nearest indoor units 3).

In addition, as described above, when the indoor units 3 and the light emitting units 9 are wirelessly connected respectively such that the indoor units 3 communicate with the light emitting units 9, the plurality of light emitting units 9 may include a master light emitting unit and slave light emitting units as described in Modification D. In this case, the master light emitting unit may transmit an instruction such as light emission control to the slave light emitting unit wirelessly connected to the specific indoor unit 3, via the indoor unit 3 to which the master light emitting unit is wirelessly connected, using communication means (either wired or wireless) allowing communication between the respective indoor units 3.

In addition, when the indoor units 3 and the light emitting units 9 are wirelessly connected to each other such that the indoor units 3 communicate with the light emitting units 9 as described above, each of the light emitting units 9 configured not to receive power supply from the indoor units 3 may have a battery as a power source without the necessity of the power source supply line included in the light source electric wire 78 of the above embodiment. Examples of this battery include a rechargeable battery and a dry cell.

### (12-8) Modification H

According to the above embodiment presented by way of example, the air-conditioning light-emitting system 100 is configured such that the plurality of light emitting units 9 are not allowed to directly communicate with each other (not allowed to communicate without the indoor units 3 and the indoor communication line 77, or wireless communication between the indoor units 3).

However, for example, the plurality of light emitting units 9 may be not only configured to communicate with each other via the indoor units 3, the indoor communication line 77 and the like, but also configured to directly communicate with each other without intervention of the indoor units 3 or the indoor communication line 77. More specifically, the plurality of light emitting units 9 may be communicable with each other by connection to each other by wire, or may be communicable with each other by connection to each other wirelessly (third communication means).

In addition, when the plurality of light emitting units 9 are connected to each other in such a manner as to allow wireless communication with each other, the plurality of light emitting units 9 may include a master light emitting unit and slave light emitting units as described above in Modification D. In this case, the master light emitting unit can wirelessly issue an instruction such as light emission control to a plurality of slave light emitting units connected to each other in a manner allowing wireless communication with each other without intervention of the indoor units 3 and the indoor communication line 77. For example, an instruction such as light emission control may be wirelessly issued to each of the slave light emitting units from the light emitting unit which functions as a master light emitting unit and corresponds to a light emitting unit which has received an instruction such as light emission control from the indoor control unit 73 or the like that has determined that the light emission condition (meeting a predetermined time condition, having the predetermined illuminance or less, and detecting the presence of a human) is met.

### REFERENCE SIGNS LIST

- 1: Air conditioner
- 2: Outdoor unit
- 3: Indoor unit (air conditioning unit)
- 9: Light emitting unit
- 11: Outdoor heat exchanger
- 30: Indoor casing
- 35: Decorative panel
- 51: Indoor heat exchanger
- 60: Collective unit
- 60a: Light source board (control unit)
- 61: LED
- 62: Illuminance sensor
- 63: Buzzer
- 64: Human detection sensor
- 70: Control unit
- 72: Outdoor control unit
- 73: Indoor control unit (control unit)
- 74: Remote controller
- 74a: Remote control board
- 74c: Display
- 77: Indoor communication line (first communication means)
- 78: Light source electric wire
- 78a to i: First to sixth light source electric wires
- 79: Human detection electric wire
- 79a to i: First to sixth human detection electric wire (second communication means)
- 81: Lens portion human detection opening
- 82: Central opening
- 84: Lower human detection opening
- 85: Light emitting opening
- 85a: Light emitting path surface
- 90: Unit casing
- 90a: Cover lens
- 90b: Lower casing
- 90c: Upper casing
- 91: Wiring opening
- 100: Air-conditioning light-emitting system
- 160a: Light source board (control unit)

### CITATION LIST

### PATENT LITERATURE

Patent Literature 1: JP 2012-28015 A

## Claims

1. An air-conditioning light-emitting system (100) including a plurality of air conditioning units (3) and a plurality of light emitting units (9), the air-conditioning light-emitting system comprising:
first communication means (77) configured to connect the air conditioning units such that the air conditioning units communicate with each other;
a plurality of second communication means (78a to 78i); and
a control unit (73, 70, 60a, 160a) which is configured to control the plurality of light emitting units using the first communication means and the second communication means, **characterized in that**
each second communication means (78a to 78i) of the plurality of second communication means electrically connects an air conditioning unit of the plurality of air conditioning units (3) and a light emitting unit of the plurality of light emitting units (9) with one-to-one correspondence such that the air
conditioning unit communicates with the connected light emitting unit,
each second communication means of the plurality of second communication means (78a to 78i) includes a power line and a
communication line, and
each of the light emitting units is configured to receive power source supply from the air conditioning unit to which the light emitting unit is communicably connected via the respective second communication means.

2. The air-conditioning light-emitting system (100) according to claim 1, wherein the plurality of light emitting units (9) include a master light emitting unit that performs light emission control of the master light emitting unit and light emission control of a slave light emitting unit that is a light emitting unit other than the master light emitting unit.

3. The air-conditioning light-emitting system (100) according to claim 2, further comprising third communication means that wirelessly connects the master light emitting unit and the slave light emitting unit such that the master light emitting unit communicates with the slave light emitting unit,
wherein the master light emitting unit performs light emission control of the slave light emitting unit via the third communication means.

4. The air-conditioning light-emitting system (100) according to any one of claims 1 to 3, wherein the plurality of light emitting units (9) are configured to emit light in linkage with each other.

## Patentansprüche

1. Lichtemittierende Klimaanlage (100), einschließend eine Vielzahl von Klimaanlageneinheiten (3) und eine Vielzahl von lichtemittierenden Einheiten (9), wobei die lichtemittierende Klimaanlage Folgendes umfasst:
erste Kommunikationsmittel (77), die ausgelegt sind, um die Klimaanlageneinheiten so zu verbinden, dass die Klimaanlageneinheiten miteinander kommunizieren;
eine Vielzahl von zweiten Kommunikationsmitteln (78a bis 78i); und
eine Steuereinheit (73, 70, 60a, 160a), die ausgelegt ist, um die Vielzahl von lichtemittierenden Einheiten unter Nutzung der ersten Kommunikationsmittel und der zweiten Kommunikationsmittel zu steuern,
**dadurch gekennzeichnet, dass** ein jedes zweite Kommunikationsmittel (78a bis 78i) der Vielzahl zweiter Kommunikationsmittel elektrisch eine Klimaanlageneinheit der Vielzahl von Klimaanlageneinheiten (3) und eine lichtemittierende Einheit der Vielzahl von lichtemittierenden Einheiten (9) mit einer Eins-zu-Eins-Übereinstimmung verbindet, sodass die Klimaanlageneinheit mit der verbundenen lichtemittierenden Einheit kommuniziert,
wobei ein jedes zweite Kommunikationsmittel der Vielzahl von zweiten Kommunikationsmitteln (78a bis 78i) eine Stromleitung und eine Kommunikationsleitung einschließt und
eine jede der lichtemittierenden Einheiten ausgelegt ist, um Stromquellenversorgung von der Klimaanlageneinheit zu erhalten, mit der die lichtemittierende Einheit kommunikationsfähig über die jeweiligen zweiten Kommunikationsmittel verbunden ist.

2. Lichtemittierende Klimaanlage (100) nach Anspruch 1, wobei die Vielzahl von lichtemittierenden Einheiten (9) eine lichtemittierende Master-Einheit einschließt, die die Lichtemissionssteuerung der lichtemittierenden Master-Einheit und die Lichtemissionssteuerung einer lichtemittierenden Slave-Einheit durchführt, bei der es sich um eine lichtemittierende Einheit handelt, die von der lichtemittierenden Master-Einheit verschieden ist.

3. Lichtemittierende Klimaanlage (100) nach Anspruch 2, zudem umfassend dritte Kommunikationsmittel, die drahtlos die lichtemittierende Master-Einheit und die lichtemittierende Slave-Einheit so verbinden, dass die lichtemittierende Master-Einheit mit der lichtemittierenden Slave-Einheit kommuniziert,
wobei die lichtemittierende Master-Einheit die Lichtemissionssteuerung der lichtemittierenden Slave-Einheit über die dritten Kommunikationsmittel durchführt.

4. Lichtemittierende Klimaanlage (100) nach einem der Ansprüche 1 bis 3, wobei die Vielzahl von lichtemittierenden Einheiten (9) ausgelegt ist, um Licht in Verknüpfung miteinander zu emittieren.

## Revendications

1. Système électroluminescent de climatisation (100) comprenant une pluralité d'unités de climatisation (3) et une pluralité d'unités électroluminescentes (9), le système électroluminescent de climatisation comprenant :
premiers moyens de communication (77) configurés pour connecter les unités de climatisation de sorte que les unités de climatisation communiquent entre elles ;
une pluralité de seconds moyens de communication (78a à 78i) ; et
une unité de commande (73, 70, 60a, 160a) qui est configurée pour commander la pluralité d'unités électroluminescentes en utilisant les premiers moyens de communication et les seconds moyens de communication,
**caractérisé en ce que** chaque second moyen de communication (78a à 78i) de la pluralité de seconds moyens de communication connecte électriquement une unité de climatisation de la pluralité d'unités de climatisation (3) et une unité électroluminescente de la pluralité d'unités électroluminescentes (9) avec une correspondance biunivoque de sorte que l'unité de climatisation communique avec l'unité électroluminescente connectée,
chaque second moyen de communication de la pluralité de seconds moyens de communication (78a à 78i) comprend une ligne d'alimentation et une ligne de communication, et
chacune des unités électroluminescentes est configurée pour recevoir une alimentation de source d'énergie de l'unité de climatisation à laquelle l'unité électroluminescente est connectée de manière communicable via les seconds moyens de communication respectifs.

2. Système électroluminescent de climatisation (100) selon la revendication 1, dans lequel la pluralité d'unités électroluminescentes (9) comprend une unité électroluminescente maître qui effectue une commande d'émission de lumière de l'unité électroluminescente maître et une commande d'émission de lumière d'une unité électroluminescente esclave qui est une unité électroluminescente autre que l'unité électroluminescente maître.

3. Système électroluminescent de climatisation (100) selon la revendication 2, comprenant en outre des troisièmes moyens de communication qui connectent sans fil l'unité électroluminescente maître et l'unité électroluminescente esclave de sorte que l'unité électroluminescente maître communique avec l'unité électroluminescente esclave,
dans lequel l'unité électroluminescente maître effectue une commande d'émission de lumière de l'unité électroluminescente esclave via les troisièmes moyens de communication.

4. Système électroluminescent de climatisation (100) selon l'une quelconque des revendications 1 à 3, dans lequel la pluralité d'unités électroluminescentes (9) est configurée pour émettre de la lumière en liaison les unes avec les autres.
